# EUROPEAN PATENT SPECIFICATION

(11) **EP 1 479 989 B1**
(45) Date of publication and mention of the grant of the patent: **06.04.2011**
(21) Application number: 03291159.6
(22) Date of filing: 19.05.2003
(51) Int. Cl.: F25J 3/02

(54) **Process and installation for providing gaseous carbon monoxide and/or a mixture containing carbon monoxide**
Verfahren und Vorrichtung zur Gewinnung von gasförmigem Kohlenstoff-Monoxid und/oder eines Gemisches, das Kohlenstoff-Monoxid enthält
Procédé et installation pour la production de monoxyde de carbone gazeux et/ou d'un mélange contenant de monoxyde de carbone

(43) Date of publication of application: 24.11.2004
(73) Proprietor: L'AIR LIQUIDE, Société Anonyme pour l'Etude et l'Exploitation des Procédés Georges Claude, 75007 Paris (FR)
(72) Inventor: Billy, Jean, 94420 Le Plessis Trevise (FR); Haik, Natacha, 94130 Nogent Sur Marne (FR)
(74) Representative: Mercey, Fiona Susan

(56) References cited:
- EP-A- 1 245 533
- DE-A- 3 631 332
- US-A- 3 813 889
- US-A- 4 311 496
- PATENT ABSTRACTS OF JAPAN vol. 2000, no. 18, 5 June 2001 (2001-06-05) & JP 01 111189 A (HITACHI LTD;HITACHI TECHNO ENG CO LTD), 27 April 1989 (1989-04-27)

## Description

This invention concerns processes and installations for providing gaseous carbon monoxide and/or a mixture containing at least 10% carbon monoxide and comprises the features of the preamble of claim 1 and claim 10 respectively which are known from EP-A-1 245 533. In particular it concerns the supply of carbon monoxide by vaporisation of liquid carbon monoxide when an industrial installation, such as a separation unit, cannot provide all or part of the gaseous carbon monoxide product.

At the beginning of the cycle of the purification unit used to purify the feed gas sent to the carbon monoxide separation unit, when one of the adsorbent beds passes from the regeneration step to the adsorption step, the carbon monoxide is absorbed in great quantities by the adsorbents, leading to a reduction in the amount of carbon monoxide produced by the separation unit. This effect is described for example in EP-A-0 748 765. The beds may contain adsorbents such as alumina or zeolites, such as molecular sieves.

To reduce this effect, as disclosed in French patent application FR-A-2833183, the purification cycle can be adapted so that following the regeneration step, only a limited amount of feed gas is sent to the bed at the beginning of the adsorption step (around 5% of the normal feed flow).

Frequently even these measures are not sufficient to ensure that the amount of carbon monoxide produced does not deviate from the required amount by more than a certain percentage. Another solution in this case can be to use a larger reactor to produce the feed gas, which of course entails extra costs.

All percentages mentioned are molar percentages and all pressures are absolute pressures.

EP-A-0837031 and EP-A-1245533 show a liquid carbon monoxide storage vessel incorporated at the top of a carbon monoxide-methane separation column, the liquid carbon monoxide being used to provide reflux for the column and to provide cooling for the methane wash column and, in the case of EP-A-0837031 for the main heat exchanger wherein the synthesis gas is used to its distillation temperature. In US-A-3886756 and US-A-4102659, independent vessels collect liquid carbon monoxide used in the carbon monoxide cycle used in the methane wash process.

According to the present invention, there is provided a process according to claim 1.

According to optional features of the invention:
- the gaseous carbon monoxide separated in the unit is removed in gaseous form from a column or a column top condenser of the unit or a permeator of the unit or a purification bed of the unit
- the separation unit operates by cryogenic distillation, permeation or adsorption ;
- the separation unit operates by cryogenic distillation and comprising the steps of purifying the feed gas using an adsorption step in one of at least two adsorbent beds to produce a purified feed gas to be sent to the separation unit, cooling at least part of the purified feed gas in a heat exchanger to form cooled purified feed gas, feeding the separation unit with at least part of the cooled purified feed gas and separating the purified feed gas by cryogenic distillation in a system of columns to produce gaseous carbon monoxide and/or being mixed with another gas to form a gaseous mixture containing at least 10% carbon monoxide as final product(s) ;
- the cryogenic separation unit comprises a CO/CH₄ column for separating a mixture containing principally carbon monoxide and methane, the storage vessel preferably forming an integral part of this column ;
- at least part of the gaseous carbon monoxide product is withdrawn from the CO/CH₄ column and the liquid carbon monoxide to be sent to the storage vessel is either formed by liquefying carbon monoxide from a carbon monoxide refrigeration cycle forming part of the separation unit and/or by removing liquid carbon monoxide from the CO/CH₄ column and/or by liquefying gaseous carbon monoxide in a heat exchanger by heat exchange between the gaseous carbon monoxide and a colder fluid derived from an external source, for example liquid nitrogen ;
- the separation unit comprises a methane wash column and wherein a first flow of liquid carbon monoxide is vaporised to cool the methane wash column, a second flow of liquid carbon monoxide is vaporised in the heat exchanger and a third flow of liquid carbon monoxide is vaporised only if one of conditions i) to iii) of Claim 1 is fulfilled ;
- the withdrawn liquid is pressurised prior to vaporisation using at least one pump or the vaporised liquid is compressed in a compressor;
- the storage vessel stores the liquid carbon monoxide at a pressure between 1 and 60 bars, preferably at the supply pressure of the gaseous carbon monoxide and/or a gaseous mixture containing at least 10% carbon monoxide ;
- the vaporised liquid carbon monoxide from the vaporiser is compressed using a compressor of a carbon monoxide refrigeration cycle and/or a carbon monoxide product compressor.

According to another aspect of the invention, there is provided an installation according to claim 10.

This installation is adapted to operate according to the process of Claim 1.

According to optional features of the invention:
- the separation unit is a cryogenic distillation unit, an adsorption unit or a permeation unit ;
- the separation unit includes a cold box, a system of columns comprising at least one cryogenic distillation column, means for sending cooled purified feed gas containing carbon monoxide as one principal component and at least one of nitrogen, methane and hydrogen as other principal components to the system of columns and further comprising a heat exchanger and an adsorption unit ;
- the cryogenic separation columns include a methane washing column associated with a heat exchanger used to cool the column by heat exchange with vaporising carbon monoxide and the vaporiser is a heat exchanger other than that associated with the methane washing column ;
- the cryogenic separation columns comprise a methane washing column, a methane/ carbon monoxide separation column and a stripping column or a phase separator, and the cold box contains a conduit for feeding bottom liquid from the methane washing column to the stripping column or to the phase separator, a conduit for feeding bottom liquid from the stripping column or from the phase separator to the methane/ carbon monoxide separation column, a conduit for removing carbon monoxide from the methane/ carbon monoxide separation column, a conduit for removing methane from the methane/ carbon monoxide separation column and a conduit for sending methane from the methane/ carbon monoxide separation column to the top of the methane washing column ;
- the storage vessel is within the cold box and is fed with liquid carbon monoxide derived from one of the cryogenic separation columns, preferably from a carbon monoxide /methane separation column ;
- the vaporiser is situated outside the cold box of the cryogenic separation unit and preferably permits heat exchange with the atmosphere or a fluid warmed than the carbon monoxide to be vaporised.

The invention will now be described in greater detail with respect to the figure which is highly simplified but contains the main elements of one installation according to the invention.

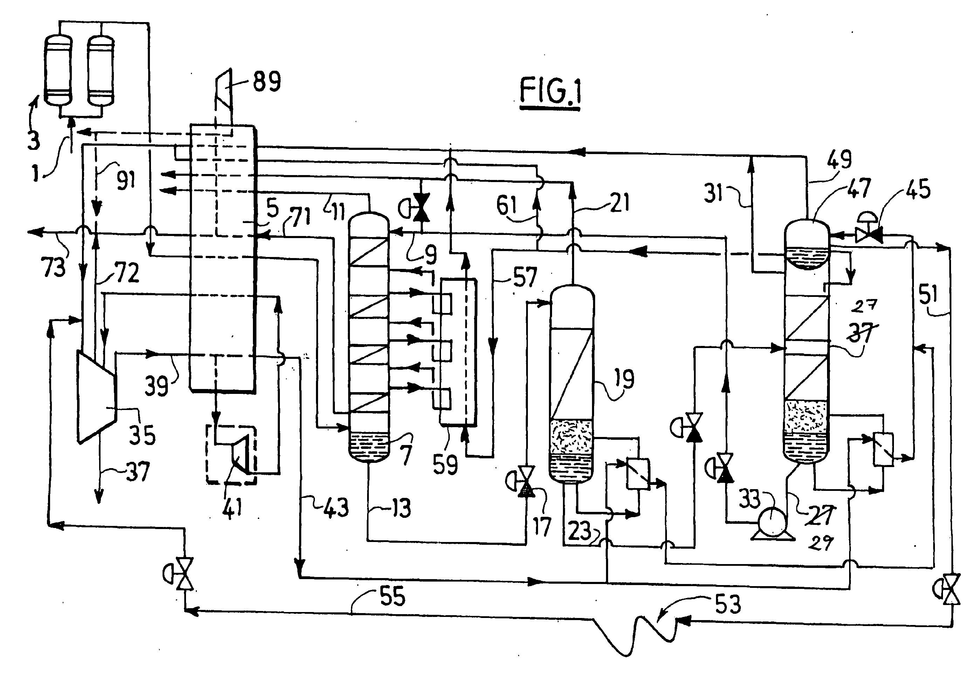

Figure 1 shows an apparatus for separating a mixture containing principally methane, carbon monoxide and hydrogen. The mixture may also contain small amounts of nitrogen, carbon dioxide, humidity, higher hydrocarbons etc. This mixture is generally synthesis gas produced by a partial oxidation unit, a steam methane reformer or an autothermal reformer.

The mixture 1 is purified in a front end purification unit 3 at around ambient temperature to removed water and carbon dioxide. Then the mixture is cooled to a cryogenic temperature in a heat exchanger 5 and sent to the bottom of a methane wash column 7 operating at a pressure between 10 and 60 bars. A methane wash stream 9 is fed to the top of column 7 and a hydrogen enriched stream 11 is removed from the top of the column. From the bottom of the column is removed a liquid stream 13 enriched in carbon monoxide.

Stream 13 is further treated before being sent to the stripping column 19 which operates at between 4 and 17 bars, at least one feed stream formed from stream 13 being sent to the top of stripping column 19. Alternatively if a methane stream is fed to the top of stripping column 19, the feed stream is feed thereto at a lower point. The gas 21 from the top of the stripping column is warmed in the exchanger 5 and is used as fuel or burnt. The liquid stream 23 from the bottom of the stripping column 19 is further treated before being sent to the column 27. In particular, several feeds (liquid, dual phase, gaseous) at different levels may be provided to the column 27. Column 27 operates at between 1 and 10 bars, often around 2.5 bars. There it is separated to form a methane rich liquid 29 at the bottom of the column and a carbon monoxide rich gas 31 at the top of the column. Part of the methane rich liquid is pumped and sent to the top of the methane washing column and the rest is removed as a purge stream. The two portions of the methane rich liquid may be removed separately from the column. In this example, the methane rich liquid is pumped by pump 33 and sent in part to the top of the methane washing column 7 and the remaining purge stream is mixed with stream 21. The part to be mixed with stream 21 need not be pumped.

The carbon monoxide rich product stream 31 is compressed in a compressor 35 and is removed as a compressed product gas 37.

Refrigeration for the system is provided by a carbon monoxide cycle of which the compressor 35 forms part. The carbon monoxide is compressed in compressor 35 to a pressure of between 10 and 60 bars. Part of the compressed carbon monoxide 39 is cooled in exchanger 5 to an intermediate temperature of the exchanger and then expanded in turbine 41. The expanded carbon monoxide gas is warmed in the exchanger 5 and recycled to the compressor 35 at the entry thereof or an intermediate pressure thereof. The unexpanded carbon monoxide 43 serves to reboil columns 19 and 27 and the thereby cooled carbon monoxide is expanded in valve 45 and sent to storage vessel 47.

In this particular case, the storage vessel 47 forms an integral part of the column 27 and additionally serves to provide reflux to the top of column 27, to supply liquid carbon monoxide to cool the methane wash column 7 and to supply liquid carbon monoxide directly to the main heat exchanger 5 where it is vaporised to balance the heat exchange diagram at the cold end of the heat exchanger 5. However there could be two storage vessels, one of which supplies the reflux to the top of the column 27 and the other of which is independent of this column or any column. This independent storage vessel could be placed within or outside the cold box (not shown) which encloses the columns 7,19,27, the exchanger 5 and the turbine 41, optionally turbine 89 which expands part 87 of gas 71.

The storage vessel may be pressurised so that the carbon monoxide is stored at between above 1 and below 60 bars. Ideally the storage vessel should be at a pressure which is substantially the product pressure of the carbon monoxide gas 37 or the carbon monoxide mixture 73, allowing for pressure drop in the conduits and vaporiser 53. Alternatively the carbon monoxide may be stored at atmospheric pressure and then, if required, pumped in liquid form and/or compressed in gaseous form to its final pressure.

Flash gas 49 produced by the expansion is mixed with the carbon monoxide rich gas 31 prior to compression.

A stream of liquid carbon monoxide 57 is vaporised in exchanger 59 against the gas streams within the methane wash column 7 and forms part of the gaseous carbon monoxide cycle.

A further stream of liquid carbon monoxide 61 withdrawn from the vessel 47 is vaporised in exchanger 5.

Both these liquid streams are withdrawn as part of the normal functioning of the process.

In addition, liquid 51 from the storage vessel 47 is withdrawn when required and vaporised in the vaporiser 53. The vaporiser may either allow heat exchange with ambient air, water or steam if it is outside the cold box or may be within the cold box and may be constituted by the exchanger 5 or another heat exchanger.

The vaporised carbon monoxide produced 55 is sent to the compressor 35 to form all or part of the product gas.

If the liquid to be vaporised 51 is available at high pressure, for example following a pumping process upstream of the vaporiser 53 or where the liquid is stored at high pressure, the gas produced can be directly mixed with the product gas 37.

The withdrawal and vaporisation of the carbon monoxide takes place during at least part of the period at the beginning of the adsorption step before the adsorbent bed is saturated with carbon monoxide and optionally
i) if there is a reduction in the amount of feed gas 1 sent to the separation unit and/or
ii) when the product requirement exceeds the maximum capacity of the separation unit.

It will be appreciated that when none of these conditions is present the level in the storage vessel will remain constant or will rise. The level will fall whenever one of the conditions is fulfilled and the vessel will need to be replenished, for example when the amount of feed gas increases and/or when the adsorbers are saturated with carbon monoxide and/or when the product requirement is less than the maximum capacity of the separation unit. To do this, either the carbon monoxide turbine needs to be overdimensioned to replenish the vessel or else a cryogenic liquid from an outside source can be added. This cryogenic liquid may be liquid carbon monoxide from an outside source or liquid nitrogen which is then used to liquefy gaseous carbon monoxide by heat exchange in a heat exchanger.

At the beginning of the adsorption step the adsorbers are operated as described in FR-A-2833183 such that the amount of feed sent to the adsorbers does not reach its full amount until the adsorber bed to which it is sent is saturated with carbon monoxide. In the example of FR-2833183, the flow starts at 5% mol. of the normal flow, then is increased to 50% mol. and finally is increased to 100%. The liquid carbon monoxide may begin to be sent to the vaporiser for example when the flow is at its smallest or alternatively may begin a few minutes before the flow is at its smallest. Preferably the liquid carbon monoxide is no longer sent to the vaporiser once the flow has increased to 50%.

In addition, it is possible to operate the separation unit so as to fill the storage vessel during the night and then use the stored carbon monoxide to provide peak requirements during the day.

Gaseous and liquid carbon monoxide are defined to be respectively a gas and a liquid containing at least 85% carbon monoxide, preferably at least 95% carbon monoxide.

The process may also be used to produce a mixture containing at least 10% carbon monoxide 73, for example an oxogas used in the production of oxoalcohols. This mixture is produced by withdrawing a gaseous mixture 71 from one of the columns of the system, warming it in exchanger 5 and enriching it by adding gaseous carbon monoxide 72 to achieve a desired concentration of carbon monoxide. Where the gaseous carbon monoxide is insufficient, part of the requirement may be provided by vaporising part of the carbon monoxide liquid from storage 47.

It will be appreciated that the invention applies to other cryogenic separation processes for mixtures containing carbon monoxide and at least one of hydrogen, nitrogen and methane as principal components, for example processes to separate mixtures of hydrogen, carbon monoxide and methane such as the partial condensation process or processes for separating mixtures containing carbon monoxide and nitrogen only as principal components.

The separation unit shown here as a cryogenic distillation unit could of course operated by permeation in a membrane system or by adsorption. In this case the liquid carbon monoxide could be imported from an external source or could be produced by liquefying part of the gaseous carbon monoxide product at times of low demand.

## Claims

1. A process for supplying gaseous carbon monoxide and/or a gaseous mixture containing at least 10% carbon monoxide in which:
a) a feed gas (1) containing carbon monoxide as at least one of its principal components and preferably at least one of nitrogen, methane and hydrogen as other principal components is purified using an adsorption step in one of at least two adsorbent beds (3) to produce a purified feed gas to be sent to a separation unit,
b) the separation unit separates the feed gas to produce gaseous carbon monoxide, wherein the gaseous carbon monoxide is a final product (37) and/or a gaseous mixture (73) is a final product containing at least 10% carbon monoxide, possibly by mixing gaseous carbon monoxide (72) with at least one other gas (71) from the separation unit
c) liquid carbon monoxide is stored in a storage vessel (47)
d) liquid carbon monoxide is withdrawn from the storage vessel and at least part (61) of the liquid is vaporised to produce gaseous carbon monoxide, the gaseous carbon monoxide forming at least part of the gaseous carbon monoxide product and/or being mixed with another gas to form at least part of the gaseous mixture containing at least 10% carbon monoxide
**characterised in that** the withdrawal and vaporisation of the liquid carbon monoxide take place during at least part of the period at the beginning of the adsorption step before the adsorbent bed is saturated with carbon monoxide and optionally
i) if there is a reduction in the amount of feed gas sent to the separation unit and/or
ii) when the product requirement exceeds the maximum capacity of the separation unit.

2. A process according to Claim 1 wherein the separation unit operates by cryogenic distillation, permeation or adsorption.

3. A process according to Claim 2 wherein the separation unit operates by cryogenic distillation and comprising the steps of cooling at least part of the purified feed gas in a heat exchanger (5) to form cooled purified feed gas, feeding the separation unit with at least part of the cooled purified feed gas and separating the purified feed gas by cryogenic distillation in a system of columns (7,19,27) to produce gaseous carbon monoxide and/or a gaseous mixture containing at least 10% carbon monoxide as final product(s).

4. A process according to Claim 2 or 3 wherein the cryogenic separation unit comprises a CO/CH₄ column (27) for separating a mixture containing principally carbon monoxide and methane, the storage vessel (47) preferably forming an integral part of this column.

5. A process according to Claim 4 wherein at least part of the gaseous carbon monoxide product is withdrawn from the CO/CH₄ column (27) and the liquid carbon monoxide to be sent to the storage vessel is either formed by liquefying carbon monoxide from a carbon monoxide refrigeration cycle forming part of the separation unit and/or by removing liquid carbon monoxide from the CO/CH₄ column and/or by liquefying gaseous carbon monoxide in a heat exchanger by heat exchange between the gaseous carbon monoxide and a colder fluid derived from an external source, for example liquid nitrogen.

6. A process according to any of Claims 3 to 5 wherein the separation unit comprises a methane wash column (7) and wherein a first flow (57) of liquid carbon monoxide is vaporised to cool the methane wash column, a second flow of liquid carbon monoxide (61) is vaporised in the heat exchanger and a third flow of liquid carbon monoxide (51) is vaporised only if one of conditions i) to iii) of Claim 1 is fulfilled.

7. A process according to any preceding claim wherein the withdrawn liquid carbon monoxide (51) is pressurised prior to vaporisation using at least one pump or the vaporised liquid carbon monoxide is compressed in a compressor (35).

8. A process according to any preceding claims wherein the storage vessel (47) stores the liquid carbon monoxide at a pressure between 1 and 60 bars, preferably at the supply pressure of the gaseous carbon monoxide and/or of the gaseous mixture containing at least 10% carbon monoxide.

9. A process according to any preceding claim wherein the vaporised liquid carbon monoxide from the vaporiser is compressed using a compressor (35) of a carbon monoxide refrigeration cycle and/or a carbon monoxide product compressor (35).

10. An installation for supplying gaseous carbon monoxide and/or a gaseous mixture containing at least 10% carbon monoxide by vaporisation of liquid carbon monoxide including
a) a separation unit and an adsorption unit (3) upstream the separation unit for purifying the feed gas,
b) a storage vessel (47)
c) a vaporiser (53)
d) a conduit (43) to send liquid carbon monoxide to the storage vessel
e) a conduit (51) for withdrawing liquid carbon monoxide from the storage vessel and for sending liquid carbon monoxide to the vaporiser where it is vaporised
f) a conduit (55) for removing vaporised carbon monoxide from the vaporiser
g) conduits for sending a feed gas (1) containing at least carbon monoxide as a principal component and preferably at least one of nitrogen, methane and hydrogen as other principal components to the adsorption unit (3) and for sending the purified feed gas to the separation unit and a conduit for removing gaseous carbon monoxide from the separation unit and **characterised in that** it comprises
means for sending the liquid carbon monoxide to the vaporiser during at least part of the period at the beginning of the adsorption step before the adsorbent bed is saturated with carbon monoxide and optionally
i) if there is a reduction in the amount of feed gas sent to the separation unit and/or
ii) when the product requirement exceeds the maximum capacity of the separation unit.

11. An installation according to Claim 10 wherein the separation unit is a cryogenic distillation unit, an adsorption unit or a permeation unit.

12. An installation according to Claim 10 wherein the separation unit includes a cold box, a system of columns comprising at least one cryogenic distillation column (7, 19, 27), means for sending cooled purified feed gas (1) containing carbon monoxide as one principal component and at least one of nitrogen, methane and hydrogen as other principal components to the system of columns and further comprising a heat exchanger (5) and an adsorption unit (3).

13. An installation according to Claim 12 wherein the cryogenic separation columns include a methane washing column (7) associated with a heat exchanger (59) used to cool the column by heat exchange with vaporising carbon monoxide (57) and the vaporiser (53) is a heat exchanger other than that associated with the methane washing column.

14. An installation according to Claim 12 or 13 wherein the cryogenic separation columns comprise a methane washing column (7), a methane/ carbon monoxide separation column (37) and a stripping column (19) or a phase separator, and the cold box contains a conduit (13) for feeding bottom liquid from the methane washing column to the stripping column or to the phase separator, a conduit (23) for feeding bottom liquid from the stripping column or from the phase separator to the methane/ carbon monoxide separation column, a conduit (49) for removing carbon monoxide from the methane/carbon monoxide separation column, a conduit (29) for removing methane from the methane/ carbon monoxide separation column and a conduit (9) for sending methane from the methane/ carbon monoxide separation column to the top of the methane washing column.

15. An installation according to any of Claims 11 to 14 wherein the storage vessel is within the cold box and is fed with liquid carbon monoxide derived from one of the cryogenic separation columns, preferably from a carbon monoxide /methane separation column (37).

16. An installation according to any of Claims 11 to 15 wherein the vaporiser (53) is situated outside the cold box of the cryogenic separation unit.

## Patentansprüche

1. Verfahren für die Lieferung von gasförmigem Kohlenmonoxid und/oder einer gasförmigen Mischung enthaltend mindestens 10 % Kohlenmonoxid, wobei:
a) Speisegas (1), das Kohlenmonoxid als mindestens eine seiner Hauptkomponenten und bevorzugt mindestens Stickstoff, Methan und/oder Wasserstoff als andere Hauptkomponenten enthält, unter Anwendung eines Adsorptionsschritts in einem von mindestens zwei Adsorptionsmittelbetten (3) unter Bildung eines gereinigten Speisegases gereinigt wird, das zu einer Trennungseinheit geschickt wird
b) die Trennungseinheit das Speisegas unter Bildung von gasförmigem Kohlenmonoxid abtrennt, wobei das gasförmige Kohlenmonoxid ein Endprodukt (37) ist und/oder eine gasförmige Mischung (73) ein Endprodukt ist, das mindestens 10 % Kohlenmonoxid enthält, möglicherweise durch Mischen von gasförmigem Kohlenmonoxid (72) mit mindestens einem anderen Gas (71) aus der Trennungseinheit
c) flüssiges Kohlenmonoxid in einem Speicherbehälter (47) gelagert wird
d) flüssiges Kohlenmonoxid aus dem Speicherbehälter abgezogen wird und mindestens ein Teil (61) der Flüssigkeit unter Bildung von gasförmigem Kohlenmonoxid verdampft wird, wobei das gasförmige Kohlenmonoxid mindestens einen Teil des gasförmigen Kohlenmonoxidprodukts bildet und/oder mit einem anderen Gas unter Bildung mindestens eines Teils der gasförmigen Mischung gemischt wird, die mindestens 10 % Kohlenmonoxid enthält
**dadurch gekennzeichnet, dass** das Abziehen und Verdampfen des flüssigen Kohlenmonoxids während mindestens eines Teils der Zeitspanne zu Beginn des Adsorptionsschritts, bevor das Adsorptionsmittelbett mit Kohlenmonoxid gesättigt wird, stattfindet und gegebenenfalls
i) wenn eine Reduktion der Menge an Speisegas, die zu der Trennungseinheit geschickt wird, erfolgt und/oder
ii) wenn das Produkterfordernis die maximale Kapazität der Trennungseinheit übersteigt.

2. Verfahren nach Anspruch 1, wobei die Trennungseinheit durch kryogene Destillation, Permeation oder Adsorption funktioniert.

3. Verfahren nach Anspruch 2, wobei die Trennungseinheit durch kryogene Destillation funktioniert und die Schritte des Kühlens mindestens eines Teils des gereinigten Speisegases in einem Wärmetauscher (5) unter Bildung von gekühltem gereinigtem Speisegas, des Speisens der Trennungseinheit mit mindestens einem Teil des gekühlten gereinigten Speisegases und des Abtrennens des gereinigten Speisegases durch kryogene Destillation in einem System von Säulen (7, 19, 27) unter Bildung von gasförmigem Kohlenmonoxid und/oder einer gasförmigen Mischung enthaltend mindestens 10 % Kohlenmonoxid als Endprodukt(e) umfasst.

4. Verfahren nach Anspruch 2 oder 3, wobei die kryogene Trennungseinheit eine CO/CH₄-Säule (27) zum Abtrennen einer Mischung enthaltend hauptsächlich Kohlenmonoxid und Methan umfasst, wobei das Speichergefäß (47) bevorzugt einen integralen Teil dieser Säule bildet.

5. Verfahren nach Anspruch 4, wobei mindestens ein Teil des gasförmigen Kohlenmonoxidprodukts aus der CO/CH₄-Säule (27) abgezogen wird und das flüssige Kohlenmonoxid, das zum Speichergefäß geschickt werden soll, entweder durch Verflüssigen von Kohlenmonoxid aus einem Kohlenmonoxidkühlzyklus, der Teil der Trennungseinheit bildet, und/oder durch Entfernen von flüssigem Kohlenmonoxid aus der CO/CH₄-Säule und/oder durch Verflüssigen von gasförmigem Kohlenmonoxid in einem Wärmetauscher durch Wärmeaustausch zwischen dem gasförmigen Kohlenmonoxid und einem kälteren Fluid, das von einer externen Quelle abgeleitet ist, beispielsweise flüssigem Stickstoff, gebildet wird.

6. Verfahren nach einem der Ansprüche 3 bis 5, wobei die Trennungseinheit eine Methanwaschsäule (7) umfasst und wobei ein erster Strom (57) von flüssigem Kohlenmonoxid verdampft wird, um die Methanwaschsäule zu kühlen, ein zweiter Strom von flüssigem Kohlenmonoxid (61) in dem Wärmetauscher verdampft wird und ein dritter Strom von flüssigem Kohlenmonoxid (51) nur dann verdampft wird, wenn eine der Bedingungen von i) bis ii) nach Anspruch 1 erfüllt ist.

7. Verfahren nach einem der vorhergehenden Ansprüche, wobei das abgezogene flüssige Kohlenmonoxid (51) vor dem Verdampfen mit Hilfe mindestens einer Pumpe unter Druck gesetzt wird oder das verdampfte flüssige Kohlenmonoxid in einem Verdichter (35) verdichtet wird.

8. Verfahren nach einem der vorhergehenden Ansprüche, wobei das Speichergefäß (47) das flüssige Kohlenmonoxid bei einem Druck zwischen 1 und 60 bar, bevorzugt bei einem Lieferdruck des gasförmigen Kohlenmonoxids und/oder der gasförmigen Mischung, die mindestes 10 % Kohlenmonoxid enthält, speichert.

9. Verfahren nach einem der vorhergehenden Ansprüche, wobei das verdampfte flüssige Kohlenmonoxid aus dem Verdampfer unter Anwendung eines Verdichters (35) eines Kohlenmonoxidkühlzyklus und/oder eines Kohlenmonoxidproduktverdichters (35) verdichtet wird.

10. Anlage für die Lieferung von gasförmigem Kohlenmonoxid und/oder einer gasförmigen Mischung enthaltend mindestens 10 % Kohlenmonoxid durch Verdampfen von flüssigem Kohlenmonoxid, die Folgendes umfasst
a) eine Trennungseinheit und eine Adsorptionseinheit (3) stromaufwärts von der Trennungseinheit zum Reinigen des Speisegases
b) ein Speichergefäß (47)
c) einen Verdampfer (53)
d) eine Leitung (43) zum Schicken von flüssigem Kohlenmonoxid zu dem Speichergefäß
e) eine Leitung (51) zum Abziehen von flüssigem Kohlenmonoxid aus dem Speichergefäß und zum Schicken von flüssigem Kohlenmonoxid zu dem Verdampfer, wo es verdampft wird
f) eine Leitung (55) zum Entfernen von verdampftem Kohlenmonoxid aus dem Verdampfer
g) Leitungen zum Schicken eines Speisegases (1), das mindestens Kohlenmonoxid als eine Hauptkomponente und bevorzugt mindestens Stickstoff, Methan und/oder Wasserstoff als andere Hauptkomponenten enthält, zu der Adsorptionseinheit (3) und zum Schicken des gereinigten Speisegases zu der Trennungseinheit und eine Leitung zum Entfernen von gasförmigem Kohlenmonoxid aus der Trennungseinheit und **dadurch gekennzeichnet, dass** sie Möglichkeiten zum Schicken des flüssigen Kohlenmonoxids zu dem Verdampfer während mindestens eines Teils der Zeitspanne zu Beginn des Adsorptionsschritts, bevor das Adsorptionsmittelbett mit Kohlenmonoxid gesättigt wird, umfasst und gegebenenfalls
i) wenn eine Reduktion der Menge an Speisegas, die zu der Trennungseinheit geschickt wird, erfolgt und/oder
ii) wenn das Produkterfordernis die maximale Kapazität der Trennungseinheit übersteigt.

11. Anlage nach Anspruch 10, wobei die Trennungseinheit eine kryogene Destillationseinheit, eine Adsorptionseinheit oder eine Permeationseinheit ist.

12. Anlage nach Anspruch 10, wobei die Trennungseinheit eine Kühlbox, ein System von Säulen, das mindestens eine kryogene Destillationssäule (7, 19, 27) umfasst, Möglichkeiten zum Schicken von gekühltem gereinigtem Speisegas (1), das Kohlenmonoxid als eine Hauptkomponente und bevorzugt Stickstoff, Methan und/oder Wasserstoff als andere Hauptkomponenten enthält, zum Säulensystem umfasst und des Weiteren umfassend einen Wärmetauscher (5) und eine Adsorptionseinheit (3).

13. Anlage nach Anspruch 12, wobei die kryogenen Trennungssäulen eine Methanwaschsäule (7) umfassen, die mit einem Wärmetauscher (59) assoziiert ist, der zum Kühlen der Säule durch Wärmeaustausch mit verdampfendem Kohlenmonoxid (57) eingesetzt wird, und der Verdampfer (53) ein Wärmetauscher ist, bei dem es sich nicht um denjenigen handelt, der mit der Methanwaschsäule assoziiert ist.

14. Anlage nach Anspruch 12 oder 13, wobei die kryogenen Trennungssäulen eine Methanwaschsäule (7), eine Methan/Kohlenmonoxidtrennungssäule (37) und eine Abtriebssäule (19) oder eine Phasentrennungsvorrichtung umfassen, und die Kühlbox eine Leitung (13) zum Führen von Sumpfflüssigkeit aus der Methanwaschsäule zu der Abtriebssäule oder zu der Phasentrennungsvorrichtung, eine Leitung (23) zum Führen von Sumpfflüssigkeit von der Abtriebssäule oder von der Phasentrennungsvorrichtung zu der Methan/Kohlenmonoxidtrennungssäule, eine Leitung (49) zum Entfernen von Kohlenmonoxid von der Methan/Kohlenmonoxidtrennungssäule, eine Leitung (29) zum Entfernen von Methan aus der Methan/Kohlenmonoxidtrennungssäule und eine Leitung (9) zum Schicken von Methan von der Methan/Kohlenmonoxidtrennungssäule zum oberen Teil der Methanwaschsäule umfasst.

15. Anlage nach einem der Ansprüche 11 bis 14, wobei das Speichergefäß sich innerhalb der Kühlbox befindet und mit flüssigem Kohlenmonoxid gespeist wird, das von einer der kryogenen Trennungssäulen, bevorzugt von einer Kohlenmonoxid/Methantrennungssäule (37) stammt.

16. Anlage nach einem der Ansprüche 11 bis 15, wobei der Verdampfer (53) sich außerhalb der Kühlbox der kryogenen Trennungseinheit befindet.

## Revendications

1. Procédé de production de monoxyde de carbone gazeux et/ou d'un mélange gazeux contenant au moins 10 % de monoxyde de carbone, selon lequel
a) un gaz d'alimentation (1) contenant du monoxyde de carbone en tant qu'au moins un de ses composants principaux et de préférence de l'azote et/ou du méthane et/ou de l'hydrogène en tant qu'autres composants principaux est purifié en utilisant une étape d'adsorption dans un d'au moins deux lits adsorbants (3) pour produire un gaz d'alimentation purifié à transférer dans une unité de séparation,
b) l'unité de séparation sépare le gaz d'alimentation pour produire du monoxyde de carbone gazeux, le monoxyde de carbone gazeux étant un produit final (37) et/ou un mélange gazeux (73) étant un produit final qui contient au moins 10 % de monoxyde de carbone, éventuellement par mélange de monoxyde de carbone gazeux (72) avec au moins un autre gaz (71) issu de l'unité de séparation,
c) du monoxyde de carbone liquide est stocké dans un réservoir de stockage (47),
d) du monoxyde de carbone liquide est soutiré du réservoir de stockage et au moins une partie (61) du liquide est vaporisée pour produire du monoxyde de carbone gazeux, le monoxyde de carbone gazeux formant au moins une partie du produit monoxyde de carbone gazeux et/ou étant mélangé avec un autre gaz pour former au moins une partie du mélange gazeux qui contient au moins 10 % de monoxyde de carbone, **caractérisé en ce que** le soutirage et la vaporisation du monoxyde de carbone liquide ont lieu pendant au moins une partie de la période au début de l'étape d'adsorption avant la saturation du lit adsorbant avec le monoxyde de carbone et éventuellement
i) s'il y a une réduction de la quantité de gaz d'alimentation transférée dans l'unité de séparation et/ou
ii) lorsque l'exigence du produit dépasse la capacité maximale de l'unité de séparation.

2. Procédé selon la revendication 1, dans lequel l'unité de séparation fonctionne par distillation cryogénique, perméation ou adsorption.

3. Procédé selon la revendication 2, dans lequel l'unité de séparation fonctionne par distillation cryogénique et comprend les étapes de refroidissement d'au moins une partie du gaz d'alimentation purifié dans un échangeur de chaleur (5) pour former un gaz d'alimentation purifié refroidi, d'alimentation de l'unité de séparation avec au moins une partie du gaz d'alimentation purifié refroidi et de séparation du gaz d'alimentation purifié par distillation cryogénique dans un système de colonnes (7, 19, 27) pour produire du monoxyde de carbone gazeux et/ou un mélange gazeux contenant au moins 10 % de monoxyde de carbone en tant que produit final ou produits finaux.

4. Procédé selon la revendication 2 ou 3, dans lequel l'unité de séparation cryogénique comprend une colonne CO/CH₄ (27) pour séparer un mélange contenant principalement du monoxyde de carbone et du méthane, le réservoir de stockage (47) formant de préférence une partie intégrale de cette colonne.

5. Procédé selon la revendication 4, dans lequel au moins une partie du produit monoxyde de carbone gazeux est soutirée de la colonne CO/CH₄ (27) et le monoxyde de carbone liquide à transférer dans le réservoir de stockage est formé par liquéfaction de monoxyde de carbone issu d'un cycle de réfrigération de monoxyde de carbone faisant partie de l'unité de séparation et/ou par soutirage de monoxyde de carbone liquide de la colonne CO/CH₄ et/ou par liquéfaction de monoxyde de carbone gazeux dans un échangeur de chaleur par échange de chaleur entre le monoxyde de carbone gazeux et un fluide plus froid dérivé d'une source externe, par exemple de l'azote liquide.

6. Procédé selon l'une quelconque des revendications 3 à 5, dans lequel l'unité de séparation comprend une colonne de lavage au méthane (7) et dans lequel un premier courant (57) de monoxyde de carbone liquide est vaporisé pour refroidir la colonne de lavage au méthane, un deuxième courant de monoxyde de carbone liquide (61) est vaporisé dans l'échangeur de chaleur et un troisième courant de monoxyde de carbone liquide (51) est vaporisé uniquement si une des conditions i) à ii) de la revendication 1 est remplie.

7. Procédé selon l'une quelconque des revendications précédentes, dans lequel le monoxyde de carbone liquide soutiré (51) est mis sous pression avant la vaporisation en utilisant au moins une pompe ou le monoxyde de carbone liquide vaporisé est comprimé dans un compresseur (35).

8. Procédé selon l'une quelconque des revendications précédentes, dans lequel le réservoir de stockage (47) stocke le monoxyde de carbone liquide à une pression comprise entre 1 et 60 bar, de préférence à la pression d'alimentation du monoxyde de carbone gazeux et/ou du mélange gazeux contenant au moins 10 % de monoxyde de carbone.

9. Procédé selon l'une quelconque des revendications précédentes, dans lequel le monoxyde de carbone liquide vaporisé issu du vaporiseur est comprimé en utilisant un compresseur (35) d'un cycle de réfrigération de monoxyde de carbone et/ou un compresseur (35) du produit monoxyde de carbone.

10. Installation pour la production de monoxyde de carbone gazeux et/ou d'un mélange gazeux contenant au moins 10 % de monoxyde de carbone par vaporisation de monoxyde de carbone liquide, comprenant
a) une unité de séparation et une unité d'adsorption (3) en amont de l'unité de séparation pour purifier le gaz d'alimentation,
b) un réservoir de stockage (47),
c) un vaporiseur (53),
d) une conduite (43) pour transférer du monoxyde de carbone liquide dans le réservoir de stockage,
e) une conduite (51) pour soutirer du monoxyde de carbone liquide du réservoir de stockage et pour transférer du monoxyde de carbone liquide dans le vaporiseur où il est vaporisé,
f) une conduite (55) pour soutirer du monoxyde de carbone vaporisé du vaporiseur,
g) des conduites pour transférer un gaz d'alimentation (1) contenant au moins du monoxyde de carbone en tant que composant principal et de préférence de l'azote et/ou du méthane et/ou de l'hydrogène en tant qu'autres composants principaux dans l'unité d'adsorption (3) et pour transférer le gaz d'alimentation purifié dans l'unité de séparation et une conduite pour soutirer du monoxyde de carbone gazeux de l'unité de séparation, et **caractérisée en ce qu'**elle comprend
des moyens pour transférer le monoxyde de carbone liquide dans le vaporiseur pendant au moins une partie de la période au début de l'étape d'adsorption avant la saturation du lit adsorbant avec le monoxyde de carbone et éventuellement
i) s'il y a une réduction de la quantité de gaz d'alimentation transférée dans l'unité de séparation et/ou
ii) lorsque l'exigence du produit dépasse la capacité maximale de l'unité de séparation.

11. Installation selon la revendication 10, dans laquelle l'unité de séparation est une unité de distillation cryogénique, une unité d'adsorption ou une unité de perméation.

12. Installation selon la revendication 10, dans laquelle l'unité de séparation comprend une boîte froide, un système de colonnes comprenant au moins une colonne de distillation cryogénique (7, 19, 27), des moyens pour transférer le gaz d'alimentation purifié refroidi (1) contenant du monoxyde de carbone en tant que composant principal et de l'azote et/ou du méthane et/ou de l'hydrogène en tant qu'autres composants principaux dans le système de colonnes, et comprenant également un échangeur de chaleur (5) et une unité d'adsorption (3).

13. Installation selon la revendication 12, dans laquelle les colonnes de séparation cryogénique comprennent une colonne de lavage au méthane (7) associée avec un échangeur de chaleur (59) utilisé pour refroidir la colonne par échange de chaleur avec du monoxyde de carbone en vaporisation (57) et le vaporiseur (53) est un échangeur de chaleur autre que celui associé avec la colonne de lavage au méthane.

14. Installation selon la revendication 12 ou 13, dans laquelle les colonnes de séparation cryogénique comprennent une colonne de lavage au méthane (7), une colonne de séparation méthane/monoxyde de carbone (37) et une colonne d'extraction (19) ou un séparateur de phases, et la boîte froide contient une conduite (13) pour alimenter le liquide de fond de la colonne de lavage au méthane dans la colonne d'extraction ou le séparateur de phases, une conduite (23) pour alimenter le liquide de fond de la colonne d'extraction ou du séparateur de phases dans la colonne de séparation méthane/monoxyde de carbone, une conduite (49) pour soutirer du monoxyde de carbone de la colonne de séparation méthane/monoxyde de carbone, une conduite (29) pour soutirer du méthane de la colonne de séparation méthane/monoxyde de carbone et une conduite (9) pour transférer du méthane de la colonne de séparation méthane/monoxyde de carbone à la tête de la colonne de lavage au méthane.

15. Installation selon l'une quelconque des revendications 11 à 14, dans laquelle le réservoir de stockage est dans la boîte froide et est alimenté avec du monoxyde de carbone liquide dérivé d'une des colonnes de séparation cryogénique, de préférence d'une colonne de séparation monoxyde de carbone/méthane (37).

16. Installation selon l'une quelconque des revendications 11 à 15, dans laquelle le vaporiseur (53) est situé à l'extérieur de la boîte froide de l'unité de séparation cryogénique.
